# EUROPEAN PATENT APPLICATION

(11) **EP 2 000 486 A2**
(43) Date of publication of application: **10.12.2008**
(21) Application number: 07738064.0
(22) Date of filing: 08.03.2007
(51) Int. Cl.: C08G 8/12, C08L 21/00, C08L 61/08

(54) **RESIN FOR BLENDING WITH RUBBER, AND RUBBER COMPOSITION**

(30) Priority: 29.03.2006 JP 2006090864
(71) Applicant: Sumitomo Bakelite Company, Ltd., Tokyo 140-0002 (JP)
(72) Inventor: MATSUMOTO, Yasunobu, Tokyo 140-0002 (JP)
(74) Representative: Müller, Christian Stefan Gerd
(86) International application number: PCT/JP2007/054574
(87) International publication number: WO 2007/111109

(57) **Abstract**

It is a main object of the present invention to provide an alkylphenol resin for rubber compounding to obtain a rubber composition having high tackiness, and a rubber composition using the same.

The present invention solves the above object by providing a resin for rubber compounding synthesized from a phenol having a para-substituted alkyl group having 1 to 18 carbon atoms and an aldehyde other than formaldehyde.

## Description

### Technical Field

The present invention relates to a resin for rubber compounding and to a rubber composition.

### Background Art

As tackifiers for unvulcanized natural or synthetic rubbers, petroleum resins or alkylphenol-formaldehyde resins synthesized from a phenol having a para-substituted alkyl group having 1 to 18 carbon atoms and formaldehyde are conventionally used. Among them, alkylphenol-formaldehyde resins have a higher ability to impart tackiness to rubber, and therefore they are used for unvulcanized synthetic rubbers which are difficult to have tackiness (see, for example, Patent Document 1).

However, according to the kind of synthetic rubber used (e.g., butadiene rubber (BR), ethylene-propylene-terpolymer (EPDM)), there is a case where sufficient tackiness cannot be imparted to a synthetic rubber even when such an alkylphenol-formaldehyde resin is used as a tackifier.

[Patent Document 1] Japanese Patent Application Laid-Open No.2005-350627

### Disclosure of the Invention

### Problem to be solved by the Invention

It is therefore an object of the present invention to provide a resin for rubber compounding, which can impart higher tackiness to rubber than a conventional alkylphenol-formaldehyde resin, and a rubber composition using such a resin.

### Means for Solving the Problem

The above object can be achieved by the following (1) to (7).
(1) A resin for rubber compounding which is obtained by reacting a phenol having a para-substituted alkyl group having 1 to 18 carbon atoms with an aldehyde other than formaldehyde.
(2) The resin for rubber compounding according to the above (1), wherein the phenol having a para-substituted alkyl group having 1 to 18 carbon atoms is one or more phenols selected from the group consisting of p-t-butylphenol, p-t-amylphenol, and p-t-octylphenol.
(3) The resin for rubber compounding according to the above (1) or (2), wherein the aldehyde is one or more aldehydes selected from the group consisting of acetaldehyde, propionaldehyde, butyraldehyde, and paraldehyde.
(4) The resin for rubber compounding according to any one of the above (1) to (3), wherein 1.0 to 6.0 mol of the aldehyde is used per mol of the phenol.
(5) The resin for rubber compounding according to any one of the above (1) to (4), which has a softening point of 80 to 150°C.
(6) A rubber composition comprising the resin for rubber compounding according to any one of the above (1) to (5) and rubber.
(7) The rubber composition according to the above (6), further comprising one or more fillers selected from the group consisting of carbon black, silica, alumina, aluminum hydroxide, calcium carbonate, titaniumoxide, magnesium silicate, talc, zinc oxide, and magnesium oxide. Effect of the Invention

According to the present invention, it is possible to obtain a resin for rubber compounding, which has a higher ability to impart tackiness to rubber than a conventional alkylphenol-formaldehyde resin. By mixing the resin according to the present invention with rubber, it is possible for a resultant rubber composition to continue to have high tackiness before vulcanization.
Further, the rubber composition according to the present invention has high tackiness before vulcanization, and its tackiness is kept even after a lapse of time.

### Best Mode for Carrying out the Invention

A resin for rubber compounding according to the present invention can be obtained by reacting a phenol having a para-substituted alkyl group having 1 to 18 carbon atoms with an aldehyde other than formaldehyde.
In such a resin obtained by reacting a phenol having a para-substituted alkyl group having 1 to 18 carbon atoms with an aldehyde other than formaldehyde, phenol skeletons of the phenol are linked together by a functional group (e.g., alkyl group) which enhances tackiness. Therefore, it can be estimated that the resin has a higher density of the tackiness-enhancing functional group than a conventional alkylphenol-formaldehyde resin obtained by using formaldehyde as an aldehyde, which allows the resin to impart high tackiness to a rubber composition.
Hereinbelow, the resin for rubber compounding according to the present invention will be described in detail.

Examples of the phenol having a para-substituted alkyl group having 1 to 18 carbon atoms to be used in the present invention include p-cresol, p-isopropylphenol, p-t-butylphenol, p-t-amylphenol, p-t-octylphenol, p-nonylphenol, and p-dodecylphenol. These phenols can be used singly or in combination of two or more of them. Among them, phenols having a para-substituted alkyl group having 4 to 9 carbon atoms are preferably used, and p-t-butylphenol, p-t-amylphenol, and p-t-octylphenol are particularly preferably used.

The amount of the phenol having a para-substituted alkyl group having 1 to 18 carbon atoms for use in forming a resin for rubber compounding according to the present invention is preferably 50 % by weight or more, more preferably 70 % by weight or more, even more preferably 80 % by weight or more, with respect to the total amount of phenols to be used. In such a case, especially, it is possible for a resultant resin to have good miscibility with various rubbers and therefore to sufficiently exhibit the ability to impart tackiness.

Instead of the phenol having a para-substituted alkyl group having 1 to 18 carbon atoms to be used in the present invention, another phenol such as phenol, o-cresol, or m-cresol may be used as long as the amount thereof is 50 % by weight or less of the total amount of phenols to be used. If the amount of another phenol exceeds 50 % by weight of the total amount of phenols to be used, there is a case where a resultant resin has poor miscibility with various rubbers and therefore cannot sufficiently exhibit the ability to impart tackiness.

Examples of the aldehyde other than formaldehyde to be used in the present invention include acetaldehyde, propionaldehyde, butyraldehyde, isobutyraldehyde, valeraldehyde, isovaleraldehyde, pivalic aldehyde, caproic aldehyde, heptaldehyde, caprylaldehyde, pelargonic aldehyde, capric aldehyde, undecylic aldehyde, lauric aldehyde, tridecyl aldehyde, myristic aldehyde, pentadecyl aldehyde, palmitic aldehyde, margaric aldehyde, stearic aldehyde, glyoxal, succindialdehyde, acrolein, crotonaldehyde, propiolaldehyde, benzaldehyde, o-tolualdehyde, m-tolualdehyde, p-tolualdehyde, salicylaldehyde, cinnamic aldehyde, α-naphthaldehyde, β-naphthaldehyde, furfural, and paraldehyde. These aldehydes can be used singly or in combination of two or more of them. Among them, acetaldehyde, propionaldehyde, butyraldehyde, and paraldehyde are optimally used.
Alternatively, substances that serve as sources of these aldehydes or solutions of these aldehydes may also be used.

The amount of the aldehyde other than formaldehyde for use in forming a resin for rubber compounding according to the present invention is preferably 50 % by weight or more, more preferably 70 % by weight or more, even more preferably 80 % by weight or more, with respect to the total amount of aldehydes to be used. In such a case, especially, it is possible for a resultant resin to have good miscibility with various rubbers and therefore to sufficiently exhibit the ability to impart tackiness.

In the present invention, formaldehyde may be used as one of aldehydes for use in forming a resin for rubber compounding. In this case, it is desirable that formaldehyde is used in an amount of 50 % by weight or less with respect to the total amount of aldehydes to be used. If the amount of formaldehyde exceeds 50 % by weight, there is a case where a resultant resin has poor miscibility with various rubbers and therefore cannot sufficiently exhibit the abilityto impart tackiness.

The reaction molar ratio between the phenol described above and the aldehyde described above is not particularly limited, but the amount of the aldehyde is preferably 1.0 to 6.0 mol, more preferably 1.0 to 3.0 mol per mol of the phenol, from the viewpoint of the viscosity of a rubber composition containing a resultant resin upon kneading.

The resin for rubber compounding according to the present invention can be usually obtained by reacting the alkylphenol described above with the aldehyde described above using, as a catalyst, a small amount of inorganic acid or organic acid such as hydrochloric acid, sulfuric acid, oxalic acid, p-toluenesulfonic acid, organic phosphonic acid, or phosphoric acids.

The amount of the unreacted alkylphenol contained in the resin for rubber compounding according to the present invention is not particularly limited, but is preferably 5 % by weight or less, more preferably 3 % by weight or less. It is to be noted that in the present invention, the amount of the unreacted alkylphenol contained in the resin for rubber compounding is measured by an internal reference method using gas chromatography (internal standard: 2,5-xylenol) in accordance with JIS K 0114.

The softening point of the resin for rubber compounding according to the present invention is preferably in the range of 80 to 150°C, more preferably in the range of 80 to 140°C from the viewpoint of handleability. The softening point of the resin for rubber compounding according to the present invention can be easily lowered, which improves workability upon kneading of the resin with rubber. It is to be noted that the softening point herein is measured in accordance with JIS K 2531.

The number average molecular weight of the resin for rubber compounding according to the present invention is preferably in the range of 500 to 2200, more preferably in the range of 600 to 2000. By setting the number average molecular weight of the resin to a value within the above range, it is possible to improve workability upon kneading of the resin with rubber. It is to be noted that the number average molecular weight herein is a polystyrene equivalent value measured by gel permeation chromatography (GPC).

Hereinbelow, a rubber composition according to the present invention will be described in detail.
The rubber composition according to the present invention comprises a resin for rubber compounding, which is obtained by reacting a phenol having a para-substituted alkyl group having 1 to 18 carbon atoms with an aldehyde other than formaldehyde, and rubber.
As described above, since the rubber composition according to the present invention comprises the resin for rubber compounding according to the present invention, it has high tackiness before vulcanization and its tackiness is kept even after a lapse of time.

The rubber contained in the rubber composition according to the present invention is not particularly limited, and natural rubbers or synthetic rubbers can be used singly or in combination of two or more of them. Preferred examples of the synthetic rubbers to be used in the present invention include diene rubbers such as cis-1,4-polyisoprene rubber, styrene-butadiene rubber, low cis-1,4-polybutadiene rubber, high cis-1,4-polybutadiene rubber, ethylene-propylene-diene rubber, chloroprene rubber, halogenated butyl rubber, acrylonitrile-butadiene rubber, and acrylonitrile-styrene-butadiene rubber.

The amount of the resin according to the present invention contained in the rubber composition according to the present invention is preferably in the range of 1 to 10 parts by weight, more preferably in the range of 2 to 7 parts by weight, with respect to 100 parts by weight of the rubber. If the amount of the resin according to the present invention is less than 1 part by weight, the effect of improving tackiness cannot be always sufficiently obtained. On the other hand, if the amount of the resin according to the present invention exceeds 10 parts by weight, it can be considered that the effect of improving tackiness can be obtained but various physical properties of the rubber composition are adversely affected.

If necessary, the rubber composition according to the present invention may further contain another appropriate component in an appropriate amount. Examples of such another component include compounding agents usually used in the field of rubber industry, such as fillers, softeners, coupling agents, vulcanizing agents, vulcanization accelerators, vulcanization acceleration assistants, antioxidants, antiozonants, and antiaging agents.

Among them, fillers are preferably used from the viewpoint of reinforcement. Specific examples of such fillers include, but are not limited to, carbon black, silica, alumina, aluminum hydroxide, calcium carbonate, titanium oxide, magnesium silicate, talc, zinc oxide, and magnesium oxide. These fillers can be used singly or in combination of two or more of them. Among them, carbon black is preferably used.

The rubber composition according to the present invention can be obtained by kneading the components described above and, if necessary, various additives with a kneader such as an open kneader (e.g., roll kneader) or a closed kneader (e.g., Banbury mixer).
The rubber composition according to the present invention is molded, and the thus obtained rubber member can be used for various rubber products. For example, the rubber composition according to the present invention is suitably used for various parts of tires, especially treads, sidewalls, bead portions, carcasses, and belts. In addition, the rubber composition according to the present invention can be appropriately used for various rubber products for industrial or home use, such as vibration-proof rubbers, belts, electrical parts, wire coating materials, packing, gaskets for sealing, water-proof sheets, and hose.
As described above, since the rubber composition according to the present invention has high tackiness before vulcanization, it can also be used as an adhesive.

### Examples

Hereinbelow, the present invention will be described in more detail with reference to the following examples. It is to be noted that the terms "part (s) " and "%" in the following description refer to "part (s) by weight" and "% by weight", respectively. The present invention is not restricted to these examples at all.

### (Example 1)

In a reactor equipped with a stirrer, a reflux condenser, and a thermometer, 1000 parts of p-t-octylphenol, 1000 parts of acetaldehyde, and 10 parts of p-toluenesulfonic acid were charged, and were then subjected to reaction for 3 hours under reflux conditions. Then, water and free monomers of p-t-octylphenol contained in the reaction mixture were removed therefrom under a reduced pressure until the amounts thereof were reduced to predetermined values. The thus obtained resin A for rubber compounding was taken out of the reactor. The softening point of the resin A was 120°C, and the amount of free p-t-octylphenol contained in the resin A was 3.0 %.

### (Example 2)

In a reactor equipped with a stirrer, a reflux condenser, and a thermometer, 1000 parts of p-t-octylphenol, 1100 parts of acetaldehyde, and 10 parts of p-toluenesulfonic acid were charged, and were then subjected to reaction for 3 hours under reflux conditions. Then, water and free monomers of p-t-octylphenol contained in the reaction mixture were removed therefrom under a reduced pressure until the amounts thereof were reduced to predetermined values. The thus obtained resin B for rubber compounding was taken out of the reactor. The softening point of the resin B was 140°C, and the amount of free p-t-octylphenol contained in the resin B was 2.0 %.

### (Example 3)

In a reactor equipped with a stirrer, a reflux condenser, and a thermometer, 1000 parts of p-t-butylphenol, 900 parts of acetaldehyde, and 10 parts of p-toluenesulfonic acid were charged, and were then subjected to reaction for 3 hours under reflux conditions. Then, water and free monomers of p-t-butylphenol contained in the reaction mixture were removed therefrom under a reduced pressure until the amounts thereof were reduced to predetermined values. The thus obtained resin C for rubber compounding was taken out of the reactor. The softening point of the resin C was 121°C, and the amount of free p-t-butylphenol contained in the resin C was 5.0 %.

### (Example 4)

In a reactor equipped with a stirrer, a reflux condenser, and a thermometer, 1000 parts of p-t-butylphenol, 1000 parts of acetaldehyde, and 10 parts of p-toluenesulfonic acid were charged, and were then subjected to reaction for 3 hours under reflux conditions. Then, water and free monomers of p-t-butylphenol contained in the reaction mixture were removed therefrom under a reduced pressure until the amounts thereof were reduced to predetermined values. The thus obtained resin D for rubber compounding was taken out of the reactor. The softening point of the resin D was 141°C, and the amount of free p-t-butylphenol contained in the resin D was 3.0 %.

### (Example 5)

In a reactor equipped with a stirrer, a reflux condenser, and a thermometer, 1000 parts of p-t-octylphenol, 1000 parts of propionaldehyde, and 10 parts of p-toluenesulfonic acid were charged, and were then subjected to reaction for 3 hours under reflux conditions. Then, water and free monomers of p-t-octylphenol contained in the reaction mixture were removed therefrom under a reduced pressure until the amounts thereof were reduced to predetermined values. The thus obtained resin E for rubber compounding was taken out of the reactor. The softening point of the resin E was 120°C, and the amount of free p-t-octylphenol contained in the resin E was 2.5 %.

### (Example 6)

In a reactor equipped with a stirrer, a reflux condenser, and a thermometer, 1000 parts of p-t-octylphenol, 800 parts of paraldehyde, and 10 parts of p-toluenesulfonic acid were charged, and were then subjected to reaction for 3 hours under reflux conditions. Then, water and free monomers of p-t-octylphenol contained in the reaction mixture were removed therefrom under a reduced pressure until the amounts thereof were reduced to predetermined values. The thus obtained resin F for rubber compounding was taken out of the reactor. The softening point of the resin F was 85°C, and the amount of free p-t-octylphenol contained in the resin F was 4.0 %.

### (Comparative Example 1)

In a reactor equipped with a stirrer, a reflux condenser, and a thermometer, 1000 parts of p-t-octylphenol, 334 parts of 37 % formalin, and 10 parts of oxalic acid were charged, and were then subjected to reaction for 3 hours under reflux conditions. Then, water and free monomers of p-t-octylphenol contained in the reaction mixture were removed therefrom under a reduced pressure until the amounts thereof were reduced to predetermined values. The thus obtained resin G for rubber compounding was taken out of the reactor. The softening point of the resin G was 122°C, and the amount of free p-t-octylphenol contained in the resin G was 2.5 %.

### (Comparative Example 2)

In a reactor equipped with a stirrer, a reflux condenser, and a thermometer, 1000 parts of p-t-octylphenol, 373 parts of 37 % formalin, and 10 parts of oxalic acid were charged, and were then subjected to reaction for 3 hours under reflux conditions. Then, water and free monomers of p-t-octylphenol contained in the reaction mixture were removed therefrom under a reduced pressure until the amounts thereof were reduced to predetermined values. The thus obtained resin H to be mixed with rubber was taken out of the reactor. The softening point of the resin H was 139°C, and the amount of free p-t-octylphenol contained in the resin H was 1.5 %.

### (Comparative Example 3)

In a reactor equipped with a stirrer, a reflux condenser, and a thermometer, 1000 parts of p-t-butylphenol, 351 parts of 37 % formalin, and 10 parts of oxalic acid were charged, and were then subjected to reaction for 3 hours under reflux conditions. Then, water and free monomers of p-t-butylphenol contained in the reaction mixture were removed therefrom under a reduced pressure until the amounts thereof were reduced to predetermined values. The thus obtained resin I for rubber compounding was taken out of the reactor. The softening point of the resin I was 119°C, and the amount of free p-t-butylphenol contained in the resin I was 1.0 %.

### (Comparative Example 4)

In a reactor equipped with a stirrer, a reflux condenser, and a thermometer, 1000 parts of p-t-butylphenol, 432 parts of 37 % formalin, and 10 parts of oxalic acid were charged, and were then subjected to reaction for 3 hours under reflux conditions. Then, water and free monomers of p-t-butylphenol contained in the reaction mixture were removed therefrom under a reduced pressure until the amounts thereof were reduced to predetermined values. The thus obtained resin J for rubber compounding was taken out of the reactor. The softening point of the resin J was 142°C, and the amount of free p-t-butylphenol contained in the resin J was 0.5 %.

### (Test for Evaluating Resin for rubber compounding)

In order to examine the characteristics of the resins obtained in Examples and Comparative Examples, each of the resins was mixed with rubber to determine the physical properties of a resultant rubber composition.

**[Table 1]**

| | |
|---|---|
| Styrene-butadiene rubber | 100 |
| Carbon black (HAF) | 50 |
| Zinc white | 2 |
| Sulfur | 2 |
| Resin for rubber compounding | 5 |

| | |
|---|---|
| (Notes in the table) (1) SBR (styrene-butadiene rubber): JSR Corporation (2) Carbon black (HAF): Mitsubishi Chemical Corporation (3) Zinc white (zinc oxide): Sakai Chemical Industry Co., Ltd. | |

These materials shown in Table 1 were mixed according to the formulation (parts by weight) shown in Table 1 and kneaded to obtain a rubber composition. The rubber composition was formed into an unvulcanized rubber sheet having a thickness of 2 mm by pressing with a hydraulic press at 85°C for 10 minutes.
Then, after 1 day, 3 days, and 7 days had elapsed from the preparation of the rubber sheet, the tackiness of the rubber sheet was measured using a PICMA Tack Tester manufactured by Toyo Seiki Seisaku-Sho, Ltd. The measurement results are shown in Table 2.

**[Table 2]**

| | | Examples | | | | | | Comparative Examples | | | |
|---|---|---|---|---|---|---|---|---|---|---|---|
| | | 1 | 2 | 3 | 4 | 5 | 6 | 1 | 2 | 3 | 4 |
| Resin | | Resin A | Resin B | Resin C | Resin D | Resin E | Resin F | Resin G | Resin H | Resin I | Resin J |
| | Phenol | p-t-octyl phenol | | p-t-butyl phenol | | p-t-octyl phenol | p-t-octyl phenol | p-t-octyl phenol | | p-t-butyl phenol | |
| | Aldehyde | acetaldehyde | | | | Propion aldehyde | Par aldehyde | formaldehyde | | | |
| | Molar Ratio (Aldehyde/Phenol) | 4.68 | 5.15 | 3.07 | 3.41 | 1.25 | 1.25 | 0.85 | 0.95 | 0.65 | 0.8 |
| | Softening Point (°C) | 120 | 140 | 121 | 141 | 120 | 85 | 122 | 139 | 119 | 142 |
| | Weight Average Molecular Weight (Mw) | 2380 | 2800 | 1120 | 1670 | 2100 | 2000 | 2780 | 2900 | 1000 | 1390 |
| | Number Average Molecular Weight (Mn) | 1500 | 1980 | 640 | 900 | 1050 | 1000 | 1500 | 2050 | 800 | 980 |
| | Free Monomer (%) | 3.0 | 2.0 | 5.0 | 3.0 | 2.5 | 4.0 | 2.5 | 1.5 | 1.0 | 0.5 |
| Tackiness (kg/cm²) | After 1 day | 12.3 | 13.2 | 12.7 | 13.5 | 12.9 | 12.0 | 8.2 | 9.0 | 8.6 | 9.4 |
| | After 3 days | 11.2 | 12.0 | 11.9 | 12.4 | 11.9 | 10.8 | 7.3 | 8.4 | 7.9 | 8.7 |
| | After 7 days | 10.5 | 11.4 | 11.0 | 11.9 | 11.2 | 10.2 | 6.5 | 7.5 | 7.1 | 7.9 |

| | | | | | | | | | | | |
|---|---|---|---|---|---|---|---|---|---|---|---|
| (Notes in the table: Measurement Methods) (1) The softening point was measured in accordance with JIS K 2531. (2) The weight average molecular weight and number average molecular weight were measured by gel permeation chromatography (GPC). GPC measurement was carried out using GPC columns manufactured by Tosoh Corporation (G1000HXL: 1 column, G2000HXL: 2 columns, G3000HXL: 1 column) and tetrahydrofuran as an elution solvent at a flow rate of 1.0 mL/min at a column temperature of 40°C, and a differential refractometer was used as a detector. These molecular weights were polystyrene equivalent molecular weights. (3) The amount of unreacted alkylphenol was measured by gas chromatography. The gas chromatography was carried out using an internal reference method (internal standard: 2,5-xylenol) in accordance with JIS K 0114. | | | | | | | | | | | |

As can be seen from Table 2, the rubber compositions containing the resins obtained in Examples 1 to 6, respectively had higher tackiness than the rubber compositions containing the resins obtained in Comparative Examples 1 to 4, respectively.

## Claims

1. A resin for rubber compounding **characterized by** obtained by reacting a phenol having a para-substituted alkyl group having 1 to 18 carbon atoms with an aldehyde other than formaldehyde.

2. The resin for rubber compounding according to claim 1, wherein the phenol having a para-substituted alkyl group having 1 to 18 carbon atoms is one or more phenols selected from the group consisting of p-t-butylphenol, p-t-amylphenol, and p-t-octylphenol.

3. The resin for rubber compounding according to claim 1 or claim 2, wherein the aldehyde is one or more aldehydes selected from the group consisting of acetaldehyde, propionaldehyde, butyraldehyde, and paraldehyde.

4. The resin for rubber compounding according to any of claims 1 to 3, wherein 1.0 to 6.0 mol of the aldehyde is used per mol of the phenol.

5. The resin for rubber compounding according to any of claims 1 to 4, which has a softening point of 80 to 150°C.

6. A rubber composition comprising the resin for rubber compounding defined by any of claims 1 to 5 and rubber.

7. The rubber composition according to claim 6, further comprising one or more fillers selected from the group consisting of carbon black, silica, alumina, aluminum hydroxide, calcium carbonate, titanium oxide, magnesium silicate, talc, zinc oxide, and magnesium oxide.
